# FASCICULE DE BREVET EUROPEEN

(11) **EP 3 698 635 B1**
(45) Date de publication et mention de la délivrance du brevet: **13.10.2021**
(21) Numéro de dépôt: 20020075.6
(22) Date de dépôt: 19.02.2020
(51) Int. Cl.: A21B 5/03

(54) **CRÊPIÈRE À HAUTEUR VARIABLE**
CRÊPEEISEN MIT EINSTELLBARER HÖHE
PANCAKE MAKER WITH VARIABLE HEIGHT

(30) Priorité: 19.02.2019 FR 1901664
(43) Date de publication de la demande: 26.08.2020
(73) Titulaire: Stona, Daniel, 1201 Geneve (CH)
(72) Inventeur: STONA, Daniel, 1201 Genève (CH); QUESNEL, Emmanuel, 77340 Pontault Combault (FR); HAMMEL, Valéry, 75010 Paris (FR)
(74) Mandataire: Stona, Daniel

(56) Documents cités:
- DE-U1- 20 210 660
- US-A- 2 446 063
- US-A- 3 092 014
- US-A- 3 683 150
- US-A- 5 320 030

## Description

L'invention concerne une crêpière à hauteur variable permettant de réaliser au moins deux crêpes et/ou galettes de dimension normale simultanément, ainsi qu'un module pour une telle crêpière. L'invention a trait également à un procédé de préparation de crêpes et/ou galettes.

### Arrière-plan de l'invention

Il existe déjà dans le commerce des crêpières domestiques permettant de faire simultanément de petites crêpes ou galettes. On trouve également des crêpières vendues avec une première plaque pour faire une crêpe ou galette de dimension normale, c'est-à-dire de la dimension d'une assiette de plat principal et une seconde plaque comportant des renforcements discoïdes pour la réalisation de mini-crêpes de la dimension d'une assiette d'entrée ou de dessert. Ces deux plaques ne peuvent être utilisées qu'alternativement.

Certaines crêpières professionnelles comprennent deux plaques disposées côte-à-côte sur un même plan horizontal. Le brevet étasunien n° US 2 446 063 publié en 1946 a pour objet une machine pour fabriquer des cookies. Il est composé d'unités superposées pour occuper un minimum d'espace et qui peuvent pivoter. Toutes les unités sont reliées indépendamment à une source d'électricité. Dans cette machine, comme dans les appareils précités, il n'est pas possible d'alimenter une partie seulement des plaques chauffantes, ce qui conduit à un gâchis d'énergie électrique si l'on ne souhaite pas utiliser la totalité de ces plaques. De plus, cette machine n'est pas prévue pour être démontée. Le brevet étasunien n° US 3 092 014 publié en 1963 propose un appareil de préparation de crêpes. Cet appareil est automatisé et il n'est pas prévu pour être démonté. Il ne permet pas à l'utilisateur de retirer sa crêpe ou sa galette quand il le souhaite. Or, rien ne vaut un œil humain, en particulier breton, pour savoir quand une crêpe ou galette est prête. La durée de cuisson d'une crêpe ou galette est en effet très variable en fonction de sa garniture. En outre, les plaques peuvent pivoter mais leurs résistances sont chacune reliées individuellement à une même source de courant et comme dans la machine précédente, il n'est pas possible d'alimenter une partie seulement des plaques chauffantes.

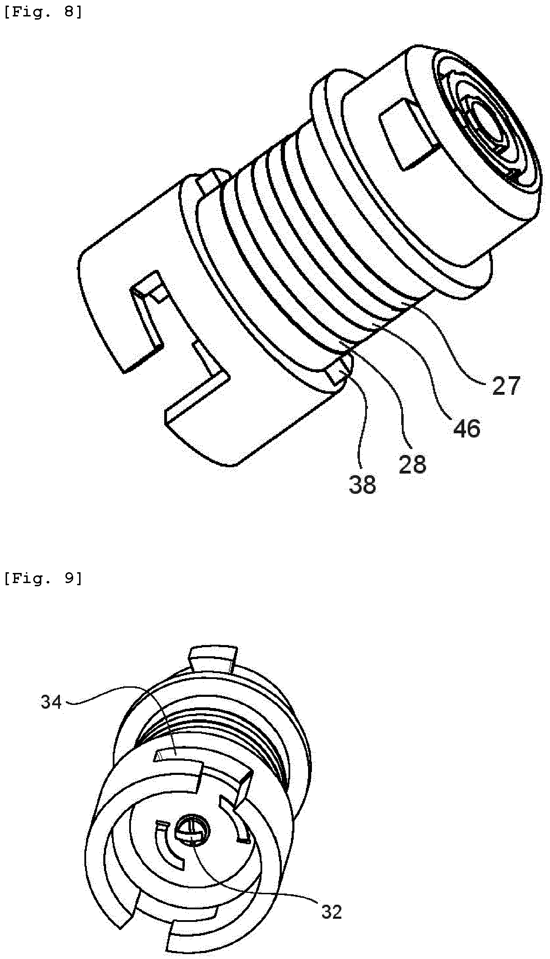

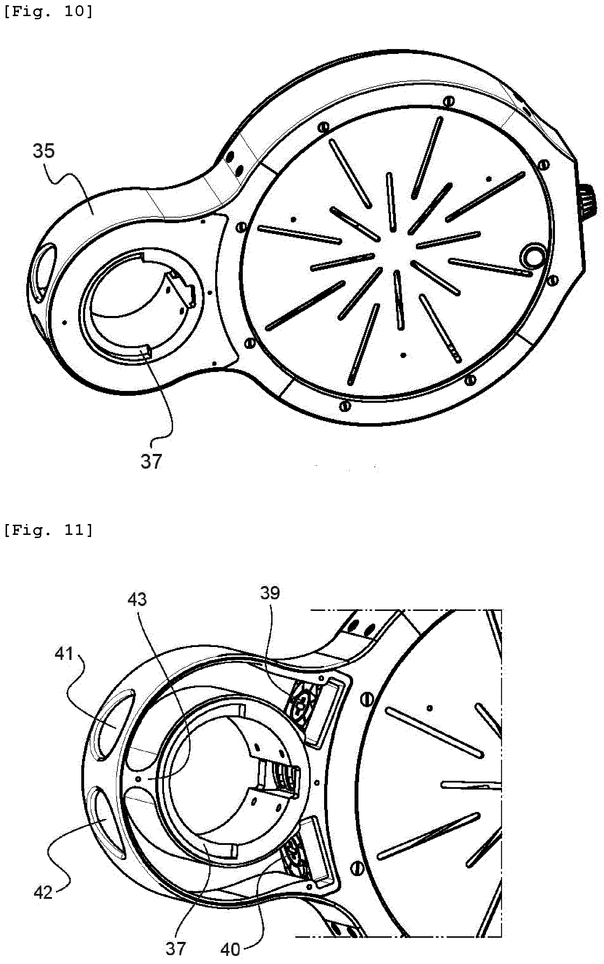

Le brevet étasunien n° US3683150 publié en 1972 a également trait à un appareil automatisé de préparation de crêpes. Ces plaques peuvent pivoter et elles sont apparemment amovibles, cependant, la colonne qui les supporte n'est pas prévue pour être démontée. Chaque plaque comprend deux conducteurs électriques connectés à la résistance chauffante ainsi que deux autres conducteurs électriques connectées à des capteurs de température. Tous ces conducteurs sont aussi connectés individuellement à une même source de courant. Ils donc prennent beaucoup de place car ils sont nombreux, seize, comme on peut le voir sur les figures 9 et 11. Qui plus est, comme dans la machine précitée, il n'est pas possible d'alimenter une partie seulement des plaques chauffantes.

De surcroît, la machine et les appareils précités, qui sont très anciens et pas ou peu démontables, sont dangereux car, datant du XXème siècle, ils ne comportent pas de mise à la terre, ce qui est d'ailleurs obligatoire de nos jours. Ainsi, depuis près d'un demi-siècle, personne ne semble être parvenu à concevoir une crêpière permettant de préparer simultanément plusieurs crêpes et/ou galettes de dimensions normales, qui soit facile à fabriquer, démonter, (re)monter, aisément transportable, simple à utiliser, adaptable au nombre de convives et d'emploi sans danger.

Finalement, le document DE 202 10 660 U1 divulgue un appareil de cuisson avec un module amovible, en particulier une casserole à fondue. La base comporte des contacts en sa face supérieure et le module comporte des conducteurs en sa face inférieure.

### Exposé sommaire de l'invention

Le but principal de l'invention est de combler la lacune précitée en proposant une crêpière à hauteur variable permettant une réaliser simultanément plusieurs crêpes et/ou galettes de dimension normale, c'est-à-dire de la taille d'une assiette de plat principal.

Selon l'invention, ce but est atteint par une crêpière à hauteur variable selon la revendication indépendante 1. Cette crêpière à hauteur variable comporte:
- une base ayant au moins trois contacts électriques d'extension et
- au moins un module pouvant être monté de manière amovible et pivotante sur cette base et comportant :
   au moins trois conducteurs électriques connectables de manière amovible aux contacts électriques d'extension de la base et aptes à rester connectés à ceux-ci lors du pivotement du module par rapport à la base,
   une surface chauffante, et
   une résistance électrique située sous la surface chauffante et connectée à deux des conducteurs électriques.
   Cette crêpière a ceci de particulier que la surface chauffante est connectée au troisième des conducteurs électriques, que les contacts électriques d'extension de la base se situent sur la face supérieure de celle-ci et que les conducteurs électriques du module ont
- une extrémité inférieure située sur la face inférieure du module et prévue pour coopérer avec les contacts électriques d'extension de la base et
- une extrémité supérieure située sur la face supérieure du module.

Une telle crêpière à hauteur variable apporte au moins les avantages suivants :
- elle est modulaire ;
- l'espace qu'elle occupe est variable et peut être réduit au minimum ; et
- elle permet de préparer simultanément quasiment autant de crêpes et/ou galettes que l'on souhaite ;
- les modules sont très facilement empilables sur la base et les uns sur les autres de manière amovible et les connexions électriques correspondantes sont elles aussi amovibles ;
- sa ou ses plaques chauffantes est/sont reliée (s) à la terre.

Bien entendu, cette crêpière peut avoir un usage domestique ou professionnel.

Des caractéristiques avantageuses de la crêpière sont indiquées dans les revendications dépendantes.

Selon un autre aspect, l'invention se rapporte aussi à un procédé de préparation de crêpes et/ou galettes, dans lequel :
- on se procure une crêpière à hauteur variable selon l'invention,
- on empile le module muni d'une première surface chauffante sur la base,
- on empile éventuellement un deuxième module (10) muni d'une deuxième surface chauffante sur le premier module et éventuellement un troisième module muni d'une troisième surface chauffante sur le deuxième module et éventuellement un quatrième module muni d'une quatrième surface chauffante sur le troisième module,
- on branche la crêpière sur le secteur et on la met en marche,
- on verse, sur la ou les surface (s) chauffante (s), de la pâte à crêpes et/ou galettes et éventuellement une garniture,
- on laisse cuire la ou les crêpe(s) et/ou galette(s), et
- on fait éventuellement pivoter sur le côté la première surface chauffante, éventuellement la deuxième surface chauffante, éventuellement la troisième surface chauffante et éventuellement la quatrième surface chauffante,
- on retire la ou les crêpe (s) ou galette (s) de la ou des surface(s) chauffante(s),
- on éteint la crêpière et on la débranche ;
- on ôte le ou les module(s);
- on nettoie éventuellement la crêpière et on la range éventuellement.

Ainsi, l'ensemble constitué par la base et les modules est particulièrement aisé à assembler car la simple pose et la rotation d'un module sur la base ou sur un autre module permet à la fois de fixer ce module et d'établir une connexion électrique entre le module et la base ou un autre module.

D'autres avantages et caractéristiques de l'invention vont maintenant être décrits en détail dans l'exposé suivant qui est donné en référence aux figures annexées, lesquelles représentent schématiquement :
- [Fig. 1] : une crêpière selon l'invention comportant quatre modules identiques ;
- [Fig. 2] : la crêpière de la figure 1, dans laquelle trois modules ont pivoté par rapport à la base ;
- [Fig. 3] : la crêpière de la figure 1, en vue éclatée ;
- [Fig. 4] : la base de la crêpière des figures 1 à 3 avec son support ;
- [Fig. 5] : le support visible sur la figure 4, en coupe et en perspective ;
- [Fig. 6] : un module de la crêpière des figures 1 à 5, auquel on a retiré la plaque chauffante ;
- [Fig. 7] : le module de la figure 6 en vue de face en coupe, et la partie supérieure d'un autre module identique sur lequel il est monté ; et
- [Fig. 8] : une pièce de liaison du module de la figure 6, en vue de face en perspective ;
- [Fig. 9] : la pièce de la liaison de la figure 7, en vue de dessous en perspective ;
- [Fig. 10] : une vue de dessous en perspective du corps principal d'un module de la crêpière des figures 1 à 5 ;
- [Fig. 11] : un agrandissement de la vue de la figure 9, après retrait d'un cache du dessous du corps principal ; et
- [Fig. 12] : un capuchon et la partie supérieure d'un module sur laquelle il est destiné à être monté.

### Exposé détaillé de l'invention

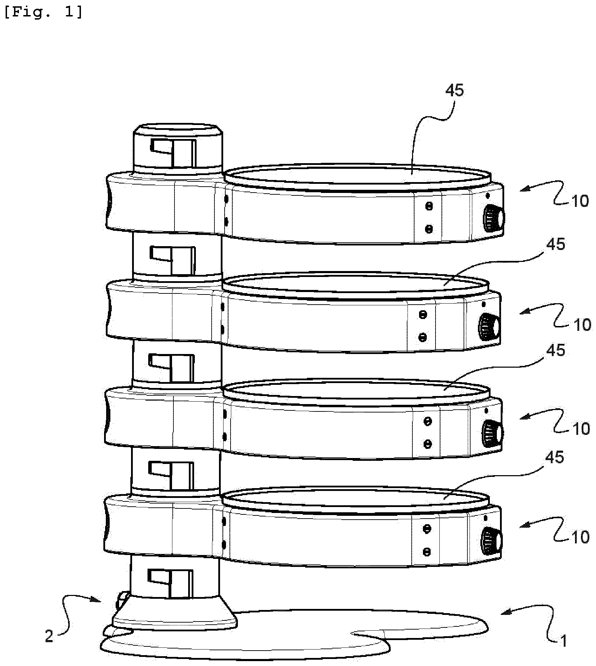

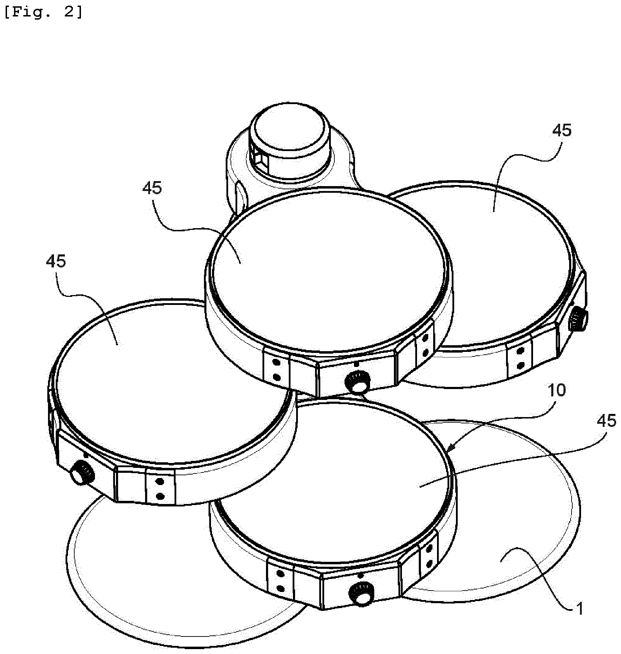

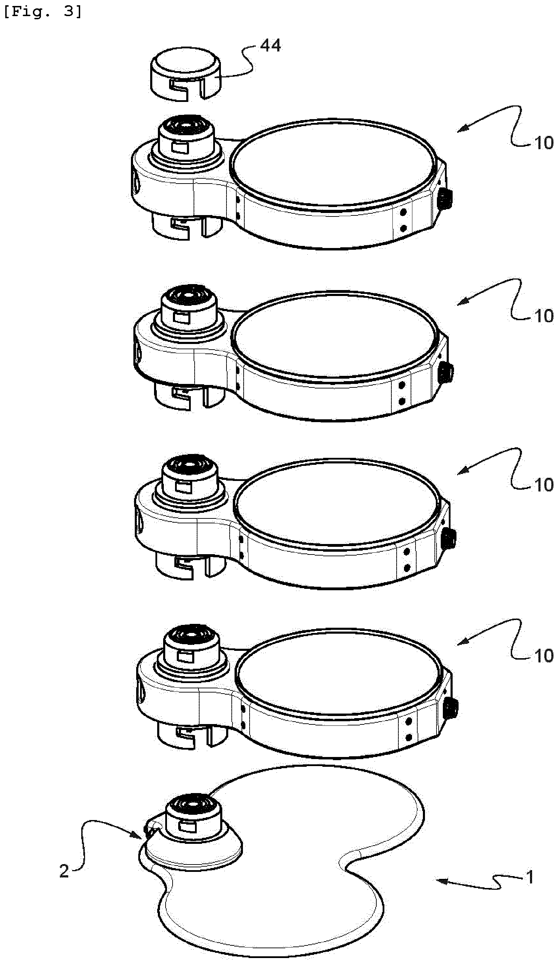

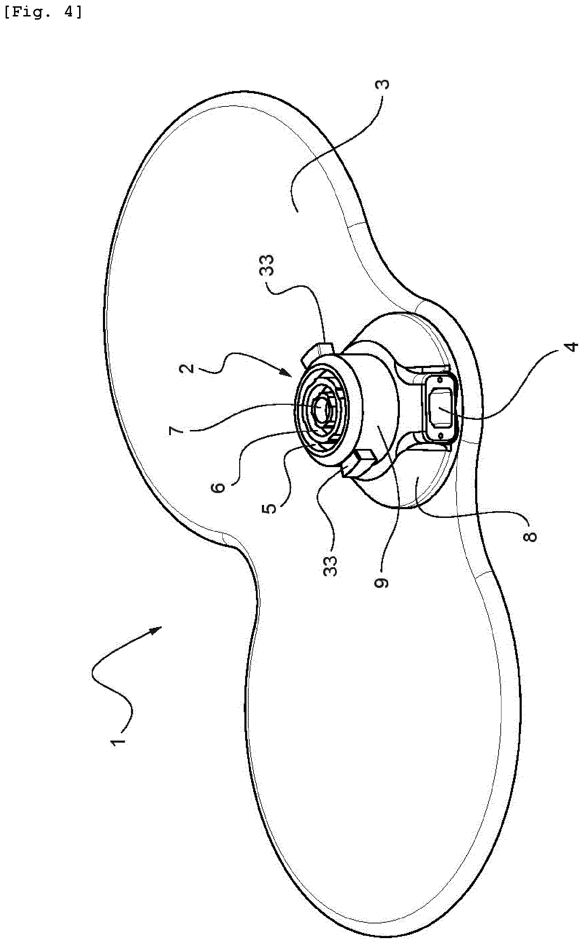

Sur les figures 1 à 12 est représenté un mode de réalisation avantageux de la crêpière selon l'invention. Celle-ci comprend tout d'abord une base 1 que l'on voit en détail sur la figure 4.

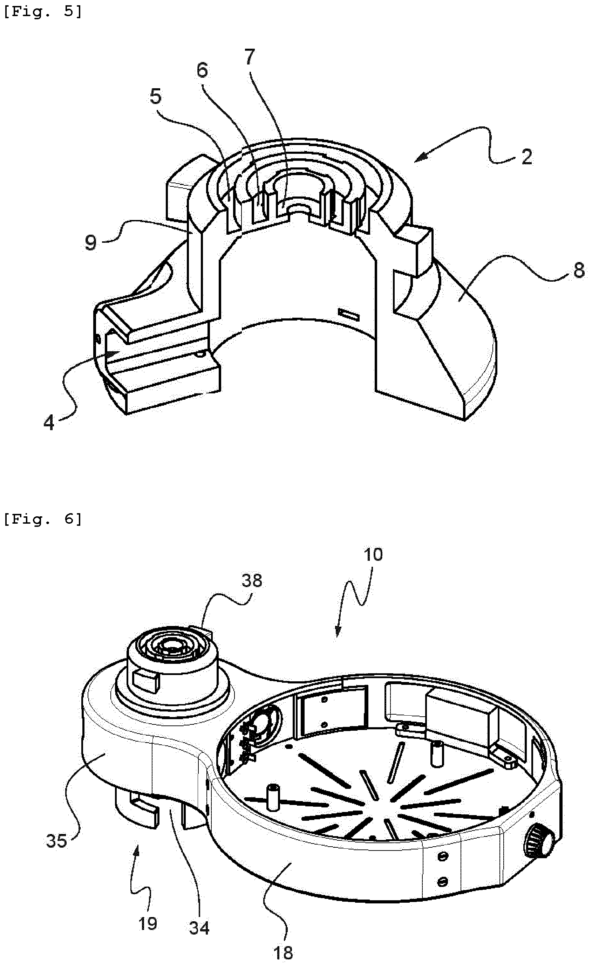

Cette base 1 ne comporte normalement pas elle-même de surface chauffante, mais un support 2 fixé, par exemple par vissage, sur une plaque plane 3 de préférence horizontale. Ce support 2 est représenté plus en détail sur la figure 5. Il comprend un logement 4 destiné à recevoir un câble de connexion classique à une source d'électricité, telle que le secteur. Ce câble comprend généralement 3 conducteurs, en principe, une phase, un neutre et un fil de terre, qui sont reliés à des contacts électriques d'extension 5,6 et 7 situés sur la face supérieure du support 2 faisant partie de la base 1 (représentés sur la figure par leurs emplacements).

De préférence, l'un au moins et avantageusement deux des contacts d'extension 5,6 a/ont une forme annulaire. Les contacts d'extension 5,6 peuvent alors être concentriques. Quant au troisième contact 7, il se trouve préférablement au centre et peut avoir une forme de disque.

Les contacts d'extension 5 et 6 correspondent indifféremment à la phase ou au neutre, tandis que le contact 7 correspond à la mise à la terre.

Les trois contacts d'extension 5,6,7 se trouvant sur la face supérieure de la base, ils sont donc accessibles par le dessus. Il est par conséquent préférable, notamment pour des raisons de sécurité, que la face supérieure du support 2 comporte des creux, comme des trous ou gorges aux fonds desquelles se situent les contacts d'extension 5,6 et 7.

De préférence, les contacts d'extension 5,6 sont de forme annulaire et le contact d'extension 7 est en forme de disque. Les contacts 5,6 se trouvent préférablement chacun au fond d'une gorge, notamment en forme de cylindre creux, et le contact d'extension 7 est préférentiellement au fond d'un trou, notamment cylindrique.

Comme on peut le voir aussi sur la figure 5, le support 2 peut présenter la forme d'un tronc de cône 8 surmonté d'une broche cylindrique creuse 9 fermée à son sommet et à la face supérieure de laquelle affleurent les contacts 5,6 et 7. Selon l'invention, les contacts électriques 5,6 et 7 sont prévus pour entrer en contact et coopérer avec les conducteurs électriques d'un module 10 tel que celui représenté sur la figure 6.

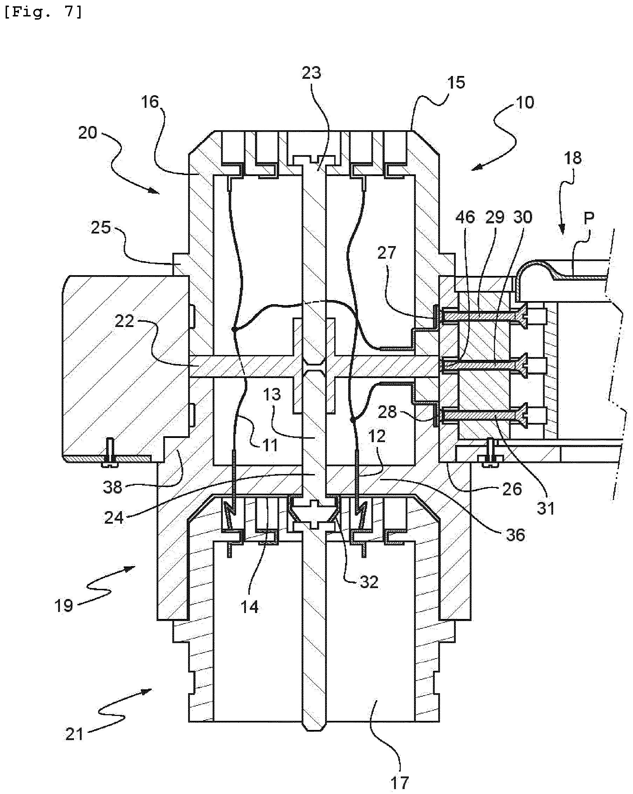

Une telle coopération est visible en détail sur la figure 7. Bien que la pièce du bas représentée sur cette figure ne soit pas la broche 9 du support 2, mais l'arbre d'un module situé en dessous, comme on le verra ultérieurement, la connexion s'établit de la même manière. Ainsi, le conducteur 11 est prévu pour coopérer avec le contact d'extension 5, le conducteur 12 avec le contact 6 et le conducteur 13 avec le contact 7 relié à la terre.

Le cas échéant, les trois conducteurs électriques 11, 12 et 13 du module 10 ont une extrémité inférieure faisant saillie vers le bas depuis la face inférieure 14 du module 10, de façon à pouvoir pénétrer respectivement dans les gorges et le trou au fond desquels se trouvent les contacts d'extension 5,6 et 7 avec lesquels ils sont respectivement destinés à venir en contact.

La face supérieure 15 du module 10 peut, elle aussi, de la même manière que la face supérieure du support 2, comporter des creux comme des gorges, notamment en forme de cylindre creux, et un trou, notamment en forme de cylindre, aux fonds desquels débouchent respectivement les extrémités supérieures des conducteurs 11, 12 et 13 qui peuvent être annulaires et discoïde, respectivement.

Le module 10 peut comporter un arbre cylindrique creux 16 fermé à son sommet, s'élevant vers le haut depuis le plan P de la surface chauffante et à la face supérieure 15 duquel arrivent les extrémités supérieures des conducteurs 11, 12 et 13, le cas échéant, dans des gorges et un trou, comme expliqué précédemment.

Toujours sur la figure 7, on voit que le module 10 peut comporter un logement cylindrique 17 apte à recevoir la broche 9 de la base 1. L'arbre cylindrique 16 du module 10 et la broche 9 de la base 1 ont alors sensiblement les mêmes dimensions.

Selon un mode de réalisation avantageux de l'invention, le module 10 comprend (cf. fig. 6) :
- un corps principal 18 supportant la surface chauffante et comprenant la résistance électrique et
- une pièce de liaison 19 maintenant le corps principal tout en lui permettant de pivoter.

Cette pièce de liaison 19 comprend de préférence une pièce supérieure creuse 20 dont l'extrémité supérieure est fermée et qui comporte une partie supérieure de l'arbre 16 du module 10. Elle peut aussi comprendre une pièce inférieure creuse 21 comportant une partie inférieure de l'arbre 16 du module 10 et présentant le logement 17 de ce module, fermé par une cloison 36 sensiblement perpendiculaire à l'axe longitudinal de l'arbre 16 et située axialement sensiblement à mi-chemin entre les extrémités supérieure et inférieure de la pièce inférieure 21.

Les pièces supérieure 20 et inférieure 21 sont de préférence assemblées au moyen d'une pièce d'assemblage 22 disposée entre elles et à laquelle elles sont fixées. Cette pièce d'assemblage 22 peut avoir la forme d'un disque dont le centre est traversé par un arbre creux taraudé et dont l'axe longitudinal est perpendiculaire au disque. Les pièces inférieure 21 et supérieure 21 comportent en leur centre un trou.

Grâce à cela, il est possible d'introduire par le haut, au centre de la pièce supérieure 20, une vis 23 dont la tête s'appuie sur la face supérieure 15 de cette pièce supérieure 20 et dont l'extrémité filetée inférieure vient se visser dans le taraudage prévu dans l'arbre creux de la pièce d'assemblage 22.

De même, une autre vis 24 peut être introduite, par le bas, au centre de la cloison 36 de la pièce inférieure 21. Sa tête s'appuie alors sur la face inférieure de la cloison 36 et son extrémité filetée supérieure vient se visser dans le taraudage de la pièce d'assemblage 22.

Selon un mode de réalisation de l'invention visible sur la figure 10, le corps principal 18 comprend une partie de liaison 35 comportant un trou permettant son montage autour de l'arbre 16 du module 10.

De préférence, cette partie de liaison 35 est maintenue entre une collerette 25 prévue sur la face longitudinale de l'arbre 16 de la pièce supérieure 20 et un épaulement 26 formé dans la pièce inférieure 21. Le maintien est prévu avec un jeu fonctionnel permettant la rotation du corps principal 18 par rapport aux pièces supérieure 21 et inférieure 20, et donc par rapport à la base 1. Ce jeu fonctionnel peut être réglé en serrant plus ou moins les vis 23 et 24.

Selon un mode de réalisation avantageux que l'on voit bien sur les figures 8 et 9, le conducteur électrique 11 est également relié à un anneau 27 prévu sur la face longitudinale de l'arbre 16, sous la collerette 25 et le conducteur électrique 12 est de même relié à un anneau 28 prévu sur la face longitudinale de la pièce inférieure 21, au-dessus de l'épaulement 26. Quant au conducteur électrique 13, il peut être constitué par les vis 23 et 24 qui sont alors métalliques, ainsi que la pièce d'assemblage 22 qui doit aussi être métallique.

L'extrémité circonférentielle 46 du disque de la pièce d'assemblage 22 enserrée entre l'extrémité inférieure de la pièce supérieure 20 et l'extrémité supérieure de la pièce inférieure 21 joue alors le même rôle que les anneaux 27 et 28. En effet, tout comme les anneaux 27 et 28, elle sert de contact annulaire pour des lamelles métalliques qui frottent tangentiellement sur les anneaux 27,28 et sur l'extrémité circonférentielle 46 et qui sont en contact et poussées par des vis métalliques 29,30,31 traversant la paroi du corps principal 18 parallèlement au plan de la surface chauffante et dont deux, par exemple celle, 29, située en haut et celle, 31, située en bas, sont reliées à la résistance électrique et celle, 30, située entre elles, est reliée à la surface chauffante pour réaliser la mise à la terre. Ainsi, lors de la rotation du corps principal 18 autour de la pièce de liaison 19, les lamelles poussées par les vis métalliques 29,30 et 31 restent en contact avec les anneaux 27, 28 et l'extrémité circonférentielle 46, de manière à ne pas interrompre les liaisons électriques.

Les extrémités inférieures des conducteurs électriques 11, 12 et 13 doivent être dimensionnées et présenter une certaine élasticité pour pouvoir exercer, tel un ressort, malgré la rotation du module 10, une certaine pression sur les conducteurs d'un modulé situé en dessous, comme on peut le voir sur la figure 7, ou sur les contacts d'extension de la base. Sur les figures 7 et 9, on voit même qu'un ressort lamellaire 32 est fixé à la tête de la vis métallique 24 pour faciliter le contact avec le conducteur électrique de terre correspondant sur l'arbre du module situé en dessous ou avec le contact d'extension de terre correspondant sur la base 1.

Afin d'améliorer la fixation du module 10 sur la base 1, la broche 9 de la base 1 comporte, comme on peut le voir en retournant à la figure 4, sur son côté cylindrique longitudinal au moins un et de préférence au moins deux ergots 33 et la paroi longitudinale du logement 17 du module 10 comprend au moins un et de préférence au moins deux évidements 34 bien visibles sur la figure 9, aptes à recevoir ce ou ces ergots 33.

Avantageusement, les ergots 33 sont sensiblement en forme d'arc de cylindre creux ayant un côté axialement plus court que l'autre et les évidements sont sensiblement en forme d'angle droit dont un côté est sensiblement perpendiculaire à l'axe longitudinal de l'arbre et a une extrémité plus courte axialement. De cette manière, en tournant la pièce inférieure sur la broche dans le sens approprié, on plaque le module 10 sur la broche 9 de la base 1 ou sur l'arbre supérieur 16 d'un autre module et on l'y fixe.

De même, l'arbre supérieur 16 du module 10 comporte aussi avantageusement un ou de préférence au moins deux ergots 33 tels que ceux décrits précédemment pour recevoir au-dessus de lui un deuxième module qui lui est identique ou similaire, les conducteurs électriques de ce deuxième module ayant leurs extrémités inférieures en contact avec les extrémités supérieures des conducteurs électriques du premier module.

Selon un autre mode de réalisation avantageux de l'invention visible sur les figures 10 et 11, des moyens sont prévus pour limiter l'angle de pivotement du corps principal 18 par rapport à la pièce de liaison 19. Sur les figures 10 et 11, on peut voir ainsi que la face inférieure de la partie de liaison 35 du corps principal 18 maintenue par les pièces supérieure 20 et inférieure 21 de la pièce de liaison 19 comporte un évidement 37 sur une partie du bord circonférentiel du trou central. Les extrémités de l'arc formé par cet évidement 37 sont prévues pour venir en butée contre un ergot 38 visible sur les figures 7 et 8. Cet ergot 38 empêche le module 10 d'effectuer un pivotement supérieur à 90 degrés par rapport à la base 1 dans la configuration visible sur la figure 1. La limitation du pivotement du module 10 par rapport à la base 1 a pour objectif d'éviter de déséquilibrer la crêpière et la faire chuter. Bien entendu, on pourrait aussi en variante prévoir une limitation supérieure ou inférieure à 90 degrés.

Sur la figure 11, on voit que la partie de liaison 35 du corps principal 18 peut avantageusement être creuse et comporter des perçages 41 et 42 séparés par une cloison 43. Des ventilateurs 39, 40 peuvent être disposés de manière à provoquer une circulation d'air froid qui entre par l'un des perçages et ressort par l'autre après avoir été chauffé par la résistance électrique et la surface chauffante. Ceci vise à éviter une surchauffe du corps principal 18 du module 10. Comme on le voit notamment sur les figures 1 à 3, un deuxième module similaire au module 10 peut être monté sur le module 10. Les extrémités inférieures de ses conducteurs électriques peuvent alors contacter les extrémités supérieures des conducteurs électriques du module 10 situé en dessous, de la même façon que les extrémités inférieures des conducteurs 11,12 et 13 coopèrent avec les contacts d'extension 5,6 et 7 de la base 1.

Bien entendu, un troisième module identique ou similaire peut être monté de la même manière sur le deuxième module et un quatrième module toujours identique ou similaire sur le troisième module.

Pour une utilisation domestique, il faudrait éviter d'utiliser trop de modules sous peine de faire sauter les plombs. A moins que l'on ne prévoie un ampérage important, ce qui est normalement le cas dans une installation professionnelle.

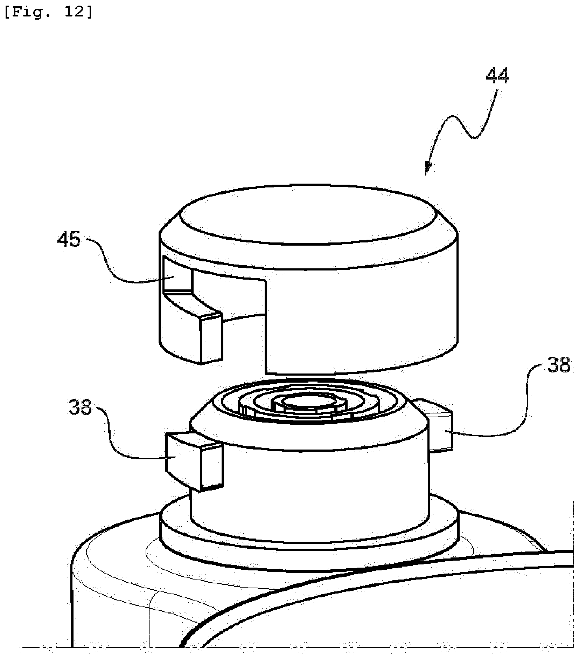

Un capuchon 44 visible notamment sur la figure 12 est de préférence placé sur la base 1 ou au sommet du module le plus élevé, de manière à recouvrir et protéger la broche cylindrique de la base ou l'arbre cylindrique du module et, le cas échéant, les creux (gorges, trou...) prévus sur sa face supérieure et empêcher de la sorte un utilisateur de toucher les conducteurs électriques. Ce capuchon 44 présente de préférence un et de préférence au moins deux évidements 45 tels que ceux prévus sur la pièce inférieure 21 des modules 10, en vue d'une coopération avec les ergots 33 de la base 1 ou 38 d'un module pour une fixation sur cette base 1 ou sur un module 10.

Les matériaux conducteurs sont généralement en métal, pour des raisons de coût. Les autres pièces qui ne sont pas indiquées comme étant conductrices d'électricité sont, comme pour une crêpière classique, en matériau isolant et résistant à la chaleur, tel que certains plastiques.

La profondeur des gorges doit être suffisamment importante pour empêcher que les doigts d'un utilisateur touchent les contacts ou conducteurs électriques.

Les dimensions de la base, des broches verticales et des arbres verticaux et leurs masses doivent être prévues pour que la crêpière reste stable même lorsque tous les modules se trouvent tous en même temps sur un même côté.

La chaleur présente sous un module peut chauffer le dessus d'une crêpe ou galette se trouvant sur la plaque chauffante située en dessous et réaliser ainsi une crêpe ou galette gratinée par exemple.

## Revendications

1. Crêpière à hauteur variable comportant :
- une base (1) ayant au moins trois contacts électriques d'extension (5,6,7) et
- au moins un module (10) pouvant être monté de manière amovible et pivotante sur cette base (1) et comportant :
- au moins trois conducteurs électriques (11, 12, 13) connectables de manière amovible aux contacts électriques d'extension (5,6,7) de la base (1) et aptes à rester connectés à ceux-ci lors du pivotement du module (10) par rapport à la base (1),
- une surface chauffante (45) et
- une résistance électrique située sous la surface chauffante (45) et connectée à deux (11, 12) des conducteurs électriques (11,12,13),
**caractérisée en ce que** la surface chauffante (45) est connectée au troisième (13) des conducteurs électriques et **en ce que** les contacts électriques d'extension (5,6,7) de la base (1) se situent sur la face supérieure de celle-ci et les conducteurs électriques (11, 12, 13) du module ont
une extrémité inférieure située sur la face inférieure (14) du module (10) et prévue pour coopérer avec les contacts électriques d'extension (5,6,7) de la base (1) et
une extrémité supérieure située sur la face supérieure (15) du module (10).

2. Crêpière selon la revendication 1, dans laquelle l'un (5,6) au moins des contacts électriques d'extension (5,6,7) de la base (1) a une forme annulaire et l'un (11, 12) au moins des conducteurs électriques (11, 12, 13) du module (10) a une extrémité supérieure de forme annulaire.

3. Crêpière selon la revendication 1 ou 2, dans laquelle l'un (11, 12, 13) au moins des conducteurs électriques (11, 12, 13) du module (10) a une extrémité inférieure faisant saillie vers le bas depuis la face inférieure (14) du module (10) et la base (1) comporte sur sa face supérieure au moins un creux apte à recevoir cette saillie et dans laquelle se trouve l'un (5,6,7) de ses contacts électriques d'extension (5, 6, 7) d'une manière prévue pour une connexion avec l'extrémité inférieure du conducteur électrique (11,12,13).

4. Crêpière selon l'une des revendications 1 à 3, dans laquelle la face supérieure (15) du module (10) comporte au moins un creux dans lequel se trouve l'extrémité supérieure de l'un (11, 12, 13) des conducteurs électriques (11,12,13).

5. Crêpière selon la revendication 4, dans laquelle l'extrémité supérieure du conducteur électrique (11,12,13) se trouvant dans le creux est positionnée dans celle-ci d'une manière prévue pour une connexion avec l'extrémité inférieure d'un conducteur électrique faisant saillie vers le bas depuis la face inférieure d'un deuxième module (10) identique ou similaire au module de la revendication 3 ou de la revendication 4 dépendante de la revendication 3.

6. Crêpière selon l'une des revendications 1 à 5, dans laquelle le module (10) comporte un arbre cylindrique (16) faisant saillie vers le haut depuis le plan (P) de la surface chauffante (45) et à la face supérieure (15) duquel se trouvent les extrémités supérieures des conducteurs électriques (11,12,13).

7. Crêpière selon l'une des revendications 1 à 6, dans laquelle la base (1) comprend une partie plane et une broche cylindrique (9) s'élevant verticalement à partir de cette partie plane, les contacts électriques d'extension (5,6,7) se trouvant à la face supérieure de cette broche (9).

8. Crêpière selon la revendication 7, dans laquelle le module (10) comporte un logement (17) apte à recevoir la broche (9) de la base (1).

9. Crêpière selon la revendication 7 ou 8, dans laquelle la broche (9) de la base (1) et l'arbre (16) du module (10) ont sensiblement les mêmes dimensions.

10. Crêpière selon l'une des revendications précédentes, dans laquelle le module (10) comprend : -
un corps principal (18) supportant la surface chauffante et comprenant la résistance électrique et
une pièce de liaison (19) maintenant le corps principal (18) tout en lui permettant de pivoter.

11. Crêpière selon la revendication 10 dépendante de la revendication 6, dans laquelle la pièce de liaison (19) comprend une pièce supérieure (20) comportant la partie supérieure de l'arbre cylindrique (16) du module (10).

12. Crêpière selon la revendication 10 ou 11 dépendantes des revendications 6 et 8, dans laquelle la pièce de liaison (19) comprend une pièce inférieure (21) comportant la partie inférieure de l'arbre (16) du module (10) et présentant le logement (17) de ce module (10).

13. Crêpière selon la revendication 12 dépendante de la revendication 11, dans laquelle les pièces inférieure (21) et supérieure (20) sont assemblées au moyen d'une pièce d'assemblage (22) disposée entre elles et à laquelle elles sont fixées.

14. Crêpière selon la revendication 13 ou selon la revendication 12 dépendante de la revendication 11, dans laquelle une partie (35) du corps principal (18) est maintenue entre la pièce inférieure (21) et la pièce supérieure (20).

15. Procédé de préparation de crêpes et/ou galettes, comportant les étapes suivantes :
- on se procure une crêpière à hauteur variable selon l'une des revendications 1 à 14,
- on empile le module (10) muni d'une première surface chauffante (45) sur la base (1),
- on empile éventuellement un deuxième module (10) muni d'une deuxième surface chauffante (45) sur le premier module (10) et éventuellement un troisième module (10) muni d'une troisième surface chauffante (45) sur le deuxième module (10) et éventuellement un quatrième module (10) muni d'une quatrième surface chauffante (45) sur le troisième module (10),
- on branche la crêpière sur le secteur et on la met en marche,
- on verse, sur la ou les surface(s) chauffante(s) (45), de la pâte à crêpes et/ou galettes et éventuellement une garniture,
- on laisse cuire la ou les crêpe(s) et/ou galette(s), et
- on fait éventuellement pivoter sur le côté la première surface chauffante (45), éventuellement la deuxième surface chauffante (45), éventuellement la troisième surface chauffante (45) et éventuellement la quatrième surface chauffante (45),
- on retire la ou les crêpe(s) ou galette(s) de la ou des surface(s) chauffante(s) (45),
- on éteint la crêpière et on la débranche ;
- on ôte le ou les module(s) (10);
- on nettoie éventuellement la crêpière et on la range éventuellement.

## Patentansprüche

1. Höhenvariables Crêpeeisen mit:
- einer Basis (1) mit mindestens drei elektrischen Extensionskontakten (5, 6, 7) und
- mindestens ein Modul (10), das abnehmbar und schwenkbar auf dieser Basis (1) montiert werden kann und aufweist:
- mindestens drei elektrische Leiter (11, 12, 13), die lösbar mit den elektrischen Extensionskontakten (5, 6, 7) der Basis (1) verbindbar sind und geeignet sind, mit diesen bei Verschwenkung des Moduls (10) gegenüber der Basis (1) verbunden zu bleiben,
- eine Heizfläche (45) und
- einen elektrischen Widerstand, der sich unter der Heizfläche (45) befindet und mit zwei (11, 12) der elektrischen Leiter (11, 12, 13) verbunden ist,
**dadurch gekennzeichnet, dass** die Heizfläche (45) mit dem dritten (13) der elektrischen Leiter verbunden ist **und dass** die elektrischen Extensionskontakte (5, 6, 7) der Basis (1) an der Oberseite der Basis und die elektrischen Leiter (11, 12, 13) des Moduls haben
ein unteres Ende, das sich an der Unterseite (14) des Moduls (10) befindet und dazu vorgesehen ist, mit den elektrischen Extensionskontakten (5, 6, 7) der Basis (1) zusammenzuwirken, und
ein oberes Ende, das sich auf der oberen Fläche (15) des Moduls (10) befindet.

2. Crêpeeisen nach Anspruch 1, wobei mindestens einer (5, 6) der elektrischen Extensionskontakte (5, 6, 7) der Basis (1) ringförmig ist und mindestens einer (11, 12) der elektrischen Leiter (11, 12, 13) des Moduls (10) ein ringförmiges oberes Ende aufweist.

3. Crêpeeisen nach Anspruch 1 oder 2, wobei mindestens einer (11, 12, 13) der elektrischen Leiter (11, 12, 13) des Moduls (10) ein unteres Ende hat, das von der Unterseite (14) des Moduls (10) nach unten vorspringt, und die Basis (1) an ihrer Oberseite mindestens eine zur Aufnahme dieses Vorsprungs geeignete Ausnehmung aufweist, in der sich einer (5,6,7) seiner elektrischen Extensionskontakte (5, 6, 7) in einer Weise befindet, die für eine Verbindung mit dem unteren Ende des elektrischen Leiters (11,12,13) vorgesehen ist.

4. Crêpeeisen nach einem der Ansprüche 1 bis 3, wobei die Oberseite (15) des Moduls (10) mindestens eine Ausnehmung aufweist, in der sich das obere Ende eines (11, 12, 13) der elektrischen Leiter (11, 12, 13) befindet.

5. Crêpeeisen nach Anspruch 4, wobei das obere Ende des elektrischen Leiters (11, 12, 13), das sich in der Ausnehmung befindet, in einer Weise darin positioniert ist, die für eine Verbindung mit dem unteren Ende eines elektrischen Leiters vorgesehen ist, der von der Unterseite eines zweiten Moduls (10) nach unten ragt, das identisch oder ähnlich zu dem Modul nach Anspruch 3 oder nach Anspruch 4 in Abhängigkeit von Anspruch 3 ist.

6. Crêpeeisen nach einem der Ansprüche 1 bis 5, wobei das Modul (10) einen zylindrischen Schaft (16) aufweist, der aus der Ebene (P) der Heizfläche (45) nach oben ragt und an dessen Oberseite (15) die oberen Enden der elektrischen Leiter (11, 12, 13) liegen.

7. Crêpeeisen nach einem der Ansprüche 1 bis 6, wobei die Basis (1) einen ebenen Abschnitt und einen zylindrische Zapfen (9) aufweist, der sich vertikal von dem ebenen Abschnitt erhebt, wobei die elektrischen Extensionskontakte (5, 6, 7) an der Oberseite des Zapfens (9) angeordnet sind.

8. Crêpeeisen nach Anspruch 7, wobei das Modul (10) ein Gehäuse (17) umfasst, das zur Aufnahme der Spindel (9) der Basis (1) geeignet ist.

9. Crêpeeisen nach Anspruch 7 oder 8, wobei der Zapfen (9) der Basis (1) und der Schaft (16) des Moduls (10) etwa die gleichen Abmessungen aufweisen.

10. Crêpeeisen nach einem der vorhergehenden Ansprüche, wobei das Modul (10) umfasst:
einen Hauptkörper (18), der die Heizfläche trägt und den elektrischen Widerstand umfasst, und
ein Verbindungsstück (19), das den Hauptkörper (18) hält, während es dessen Drehung ermöglicht.

11. Crêpeeisen nach Anspruch 10 in Abhängigkeit von Anspruch 6, wobei das Verbindungsstück (19) ein Oberteil (20) umfasst, das den oberen Abschnitt des zylindrischen Schafts (16) des Moduls (10) umfasst.

12. Crêpeeisen nach Anspruch 10 oder 11 in Abhängigkeit von den Ansprüchen 6 und 8, wobei das Verbindungsstück (19) ein Unterteil (21) aufweist, das den unteren Teil des Schafts (16) des Moduls (10) umfasst und das Gehäuse (17) dieses Moduls (10) aufweist.

13. Crêpeeisen nach Anspruch 12 in Abhängigkeit von Anspruch 11, **dadurch gekennzeichnet, dass** das Unterteil (21) und das Oberteil (20) durch ein Montageteil (22) zusammengefügt sind, das zwischen ihnen angeordnet ist und an dem sie befestigt sind.

14. Crêpeeisen nach Anspruch 13 oder nach Anspruch 12 in Abhängigkeit von Anspruch 11, wobei ein Abschnitt (35) des Hauptkörpers (18) zwischen dem Unterteil (21) und dem Oberteil (20) gehalten ist.

15. Verfahren zur Herstellung von Crêpes und/oder Galettes, umfassend die folgenden Schritte:
- Bereitstellen eines höhenverstellbarer Crêpeeisen nach einem der Ansprüche 1 bis 14,
- Stapeln des Moduls (10), das mit einer ersten Heizfläche (45) versehen ist, auf der Basis (1),
- Aufstapeln optional eines zweiten Moduls (10), das mit einer zweiten Heizfläche (45) versehen ist, auf das erste Modul (10) und optional eines dritten Moduls (10), das mit einer dritten Heizfläche (45) versehen ist, auf das zweite Modul (10) und optional eines vierten Moduls (10), das mit einer vierten Heizfläche (45) versehen ist, auf das dritte Modul (10),
- Anschließen des Crêpeeisens an das Stromnetz und es in Betrieb nehmen,
- Einbringen des Teigs für Crêpes und/oder Galettes auf die Heizfläche (45) oder auf die Heizflächen (45) und eventuell einer Füllung oder eines Belags,
- Kochen oder Backen lassen des oder der Crêpe(s) und/oder des oder der Galette(s) und
- zur Seite drehen eventuell der ersten Heizfläche (45), eventuell der zweiten Heizfläche (45), eventuell der dritten Heizfläche (45) und eventuell der vierten Heizfläche (45),
- Entnehmen des oder der Crêpe(s) und/oder der Waffel(n) von der oder den Heizfläche(n) (45),
- Ausschalten des Crêpeeisens und Ziehen des Steckers;
- Abnehmen des Modules oder der Modul(e) (10);
- eventuell Reinigen des Crêpeeisens und eventuell es Wegräumen.

## Claims

1. A variable height pancrepe maker comprising :
- a base (1) having at least three extension electrical contacts (5, 6, 7) and
- at least one module (10) which can be removably and pivotally mounted on said base (1) and comprising :
- at least three electrical conductors (11, 12, 13) removably connectable to the extension electrical contacts (5, 6, 7) of the base (1) and capable of remaining connected thereto when the module (10) is pivoted with respect to the base (1),
- a heating surface (45), and
- an electrical resistor located under the heating surface (45) and connected to two (11, 12) of the electrical conductors (11, 12, 13)
**characterised in that** the heating surface (45) is connected to the third (13) of the electrical conductors **and in that** the extension electrical contacts (5,6,7) of the base (1) are located on the upper face of the base (1) and the electrical conductors (11,12,13) of the module (10) have
a lower end located on the lower face (14) of the module (10) and adapted to cooperate with the extension electrical contacts (5,6,7) of the base (1) and
an upper end located on the upper face (15) of the module (10).

2. A pancake maker according to claim 1, wherein at least one (5,6) of the extension electrical contacts (5,6,7) of the base (1) is ring-shaped and at least one (11, 12) of the electrical conductors (11,12,13) of the module (10) has a ring-shaped upper end.

3. A pancake maker according to claim 1 or 2, in which at least one (11, 12, 13) of the electrical conductors (11, 12, 13) of the module (10) has a lower end projecting downwards from the lower face (14) of the module (10) and the base (1) has on its upper face at least one recess capable of receiving this projection and in which is located one (5, 6,7) of its extension electrical contacts (5,6,7) in a manner intended for a connection with the lower end of the electrical conductor(11, 12, 13).

4. A pancake maker according to any one of claims 1 to 3, wherein the upper face (15) of the module (10) has at least one recess in which the upper end of one (11,12,13) of the electrical conductors (11,12,13) is located.

5. A pancrepe maker according to claim 4, wherein the upper end of the electrical conductor (11,12,13) in the recess is positioned therein in a manner intended for a connection with the lower end of an electrical conductor projecting downwardly from the lower face of a second module (10) identical or similar to the module of claim 3 or claim 4 depending on claim 3.

6. A pancake maker according to any one of claims 1 to 5, wherein the module (10) comprises a cylindrical shaft (16) projecting upwardly from the plane (P) of the heating surface (45) and at the upper face (15) of which are the upper ends of the electrical conductors (11, 12, 13).

7. A pancake maker according to any one of claims 1 to 6, wherein the base (1) comprises a flat portion and a cylindrical spindle (9) rising vertically from said flat portion, the extension electrical contacts (5,6,7) being at the upper face of said spindle (9).

8. A pancake maker according to claim 7, wherein the module (10) comprises a housing (17) adapted to receive the spindle (9) of the base (1).

9. A pancrepe maker according to claim 7 or 8, wherein the spindle (9) of the base (1) and the shaft (16) of the module (10) have substantially the same dimensions.

10. A pancrepe maker according to any one of the preceding claims, wherein the module (10) comprises:
a main body (18) supporting the heating surface and comprising the electrical resistance and a connecting part (19) holding the main body (18) while allowing it to pivot.

11. A pancrepe maker according to claim 10 dependent on claim 6, wherein the connecting part (19) comprises a top piece (20) comprising the upper portion of the cylindrical shaft (16) of the module (10).

12. A pancrepe maker according to claim 10 or 11 depending on claims 6 and 8, wherein the connecting part (19) comprises a lower part (21) comprising the lower portion of the shaft (16) of the module (10) and having the housing (17) of this module (10).

13. A pancake maker according to claim 12 dependent on claim 11, wherein the lower (21) and upper (20) parts are assembled by means of a mounting part (22) arranged between them and to which they are fixed.

14. A pancrepe maker according to claim 13 or to claim 12 dependent on claim 11, wherein a portion (35) of the main body (18) is held between the lower part (21) and the upper part (20).

15. Method for preparing pancakes and/or galettes, comprising the following steps:
- getting a variable-height pancrepe maker according to any one of claims 1 to 14,
- the module (10) provided with a first heating surface (45) is stacked on the base (1),
- a second module (10) provided with a second heating surface (45) is optionally stacked on the first module (10) and a third module (10) provided with a third heating surface (45) is optionally stacked on the second module (10) and a fourth module (10) provided with a fourth heating surface (45) is optionally stacked on the third module (10),
- the pancrepe maker is connected to the mains and switched on,
- a pancake and/or galette dough and optionally a filling are poured onto the heating surface(s) (45),
- the pancake(s) and/or galette(s) are left to cook, and
- the first heating surface (45), optionally the second heating surface (45), optionally the third heating surface (45) and optionally the fourth heating surface (45) are rotated to the side,
- the pancrepe(s) or galette(s) are removed from the heating surface(s) (45),
- the pancrepe maker is switched off and unplugged,
- the module(s) (10) is/are removed,
- the crepe maker is optionally cleaned and optionally stored.
